# EUROPEAN PATENT APPLICATION

(11) **EP 0 945 693 A2**
(43) Date of publication of application: **29.09.1999**
(21) Application number: 99302269.8
(22) Date of filing: 24.03.1999
(51) Int. Cl.: F25B 41/00, F16L 19/02

(54) **Method and apparatus for sealing a refrigeration system**

(30) Priority: 24.03.1998 GB 9806141
(71) Applicant: UNIVERSAL MASTER PRODUCTS LTD, Hayes, Bromley, Kent BR2 7EQ (GB)
(72) Inventor: Lamstaes, Guy, c/o Universal Master Products Ltd, Hayes, Bromley, Kent BR2 7EQ (GB)
(74) Representative: Archer, Philip Bruce

(57) **Abstract**

Method of sealing a refrigeration system provides a compressible sealing member of a poly-halogenated polymer located in a tapered compression joint and adapted to be compressed into the cavities and/or interstices of the joint to effect edgewise or end-sealing of the refrigerant fluid.

## Description

This invention relates to a method and apparatus for refrigerant sealing. A non-limiting example of the application of the invention is to the sealing of commercial refrigeration systems against the escape of refrigerant, particularly during the periods of use of the system in which the refrigerant system is pressurised, with the well known environmental consequences of escape.

The environmental hazards arising from refrigeration systems have been extremely well publicised and likewise the research and technical effort expended upon the identification of an development of alternative and less harmful refrigeration media. It appears now to be widely thought that the environmental effect of halocarbons on the earths ozone layer and otherwise has been largely overcome by the introduction of alternative refrigerant media. However, the Applicants are aware that this is not technically correct and that the balance of technical effectiveness of the alternative refrigerant media as such, together with their not insignificant effects on the ozone layer and the environment generally is such that the position is little changed from that which existed in the years before the relatively recent publicity media attention to these factors.

Accordingly, the true technical/commercial position is that there is still a fundamental need for measures to reduce the escape of refrigerant media into the atmosphere. Moreover, we have discovered that a very substantial part of the loss of such media into the atmosphere occurs at a relatively undetectable level (in terms of the concentration of escaped refrigerant medium) from joints between pipes and other structures in commercial refrigeration systems. To some extent the same problem exists in relation to domestic refrigeration systems, air conditioning systems, and indeed to automotive air conditioning systems and other systems in which a refrigeration stage takes place.

Specifically, the problem is as follows. Refrigerant media are, by definition,highly volatile liquids/gases at the normal conditions of temperature and pressure in refrigeration systems. Moreover, the chemical nature of such materials is such that they have a highly penetrative physical nature whereby the inherent tendency of pressurised liquids and gases to escape through system joints is significantly enhanced.

A further significant factor, and one which is particularly pertinent in relation to the present invention, concerns the established practice in the field of refrigeration of using exclusively metal-to-metal joints in effecting seals between components such as pipe sections and pipe-to-housing joints. Doubtless this practice and indeed prejudice within the refrigeration industry derives from well-established practice in the art whereby it may have been found that metal-to-metal joins represent an apparently satisfactory way of constructing and operating a system, particularly where facilities exist for charging the refrigeration system.

However, we have discovered that metal-to-metal joints are subject to significant but relatively undetectable refrigerant escape losses, and the present invention seeks to provide improvements in this respect.

A further possible origin of the current practice in relation to the refrigerant industry, as mentioned above, in respect of the exclusive use of metal-to-metal joints, no doubt logically arises from the fact that refrigerant media are volatile aliphatic organic liquids having predictably high values in term of their ability to act as solvents from a wide range of industrially-used materials whereby it would be accepted that such materials would have a damaging effect in terms of prolonged exposure of such materials within a refrigeration system.

There is disclosed in EP-A-06 93 645 (Carrier Corporation) a gasket for refrigerant compressors having the features of the pre-characterising portion of claim 1 hereof in which the gasket for sealing a refrigeration system comprises a fluoroelastomer for the HFC refrigerant lubricant mix and the arrangement is such that the fluoroelastomer reacts with the fluid media so as produce swelling of the coating which it provides for a metal core of the gasket. No disclosure or suggestion is made that the fluoroelastomer can be compressed into sealing interstices of the joint. Indeed, the contrary is asserted in that the swelling of the coating is inhibited by the load applied to the joint.

There is disclosed in GB 1281477 (VEB CKW) a sealing element comprising a fibrous carrier for sealing the flanges of chemical apparatus and of compressors in refrigeration systems. In an embodiment, the sealing material comprises a layer of fibrous carrier material which has been impregnated with polytetrafluoroethylene. It is disclosed that this material shows a clearly improved resistance to solvent attack. No disclosure is provided relating to the mechanical characteristics of the use of the material, notably in regard to distortion under load.

In US 5,459,202 (Martinez) there are disclosed fluoroelastomer seals for sealing such fluids as fluorocarbons, chlorocarbons, hydrogenfluoride and hydrogenchloride etc. It is stated that fluroelastomeric polymers have been utilised extensively for sealing applications of this kind and that the invention meets the need for improved resistance to fluorochemical fluids by providing a seal comprising cured, coherent, homogeneous elastomer blends comprising cholorotrifluoroethelene-vinylidene fluoride (CTFE-VF₂) elastomer, and cholorine-free fluoroelastomer, and a minor proportion of hydrocarbon polymer. No disclosure appears to be provided with respect to the mechanical performance of these materials in relation to response to compression under load and related mechanical aspects of relevance to the present invention.

We have discovered that contrary to the teaching of the prior-art, a surprising and beneficial effect can be obtained in terms of sealing refrigerants against the hitherto unrecognised long term low level losses through slightly leaking pipe joints by means of the defined use of certain polymeric sealing materials, notably poly-halogenated materials such as polytetrafluoroethylene or the Dupont product TPFE. Other poly-halogenated polymers may be found which are also beneficial in terms of the technical advances provided by the present invention.

According to the invention there is provided a method of sealing a joint in a refrigeration system as defined in the accompanying claims.

In an embodiment of the invention there is provided a method of sealing a joint in a refrigeration system. The refrigeration system comprises a refrigerant fluid and a circulation system therefor, and the circulation system includes one or more heat exchangers and means for circulating the refrigerant fluid within said system to cause heat exchange to be effected. Sealing means for the circulation system comprises one or more joints adapted to confine the refrigerant fluid and the sealing system comprises a sealing member comprising a halogenated polymer adapted to be located in a joint in the system. The sealing member is adapted, by having a co-efficient of hardness accordingly, to be compressible into one or more cavities or interstices within the joint. The joint comprises one or more of said cavities or interstices located on the path of escape of the refrigerant fluid from the circulation system. The joint comprises a pair of actuatable compression members with the sealing member located between such members and actuating means being provided and adapted to compress the sealing member in a manner such as to promote compression of same towards the cavities or interstices. The actuating means is caused to effect compression of the sealing member at least partially into the cavities or interstices whereby the escape of the refrigerant fluid is blocked edgewise by the compressed sealing member in said cavities or interstices.

In this way, there is provided in a simple and cost-effective manner (and without hindering full circulation of refrigeration) means for causing highly effective sealing of the refrigerant fluid by employing the cavities or interstices of the joint structure as a means for offering a very highly resistant seal which operates in the unconventional manner of sealing in an edgewise or end-facing manner so that the escape of the fluid is blocked over a very substantial path length instead of the usual arrangement whereby it is just a short or even point-contact region (such as a lip) which is required to effect the entire sealing performance.

It is noted in relation to the embodiments of the invention described below that the use of poly-halogenated sealing materials in relation to refrigerant fluids is an unexpected aspect of the present invention since the normal expectation in relation to such materials is that a solvent effect would be predicted to be likely to rule out the effective long-term use of a system in which such fluids and solids can come into direct contact with a seal, particularly under conditions of pressurisation.

A further aspect of the method and apparatus of the present invention relates to the provision of means whereby the sealing materials of the embodiments are caused to be forced and/or distorted and in some cases extruded into the interstices of the structure of the joint to be sealed, thereby enhancing the sealing effect. Thus, for example, the sealing material is forced into the helical thread of a threaded compression joint structure. Likewise, the seal material is correspondingly deformed into other cavities and spaces within the joint structure so that these are positively sealed without requiring a substantial torque load on the compression joint as is the case with metal-to-metal-sealing joint structures.

It is to be understood that the coefficient of hardness of the seal material is to be chosen in accordance with the required flow characteristics discussed above in relation to penetration of joint cavities.

A further similar sealing member may be provided in a sealed joint eg behind the flared end (D) of the copper pipe (Fig III) between the flare and the nut base so as to encapsulate the flare completely and protect it from vibration. This seal is likewise compressed and distorted into the adjacent cavities of the joint.

Further details of the background and specific embodiments of the invention will now be described in the following pages to which reference is hereby directed.

This invention relates to a **SEAL** for joints in pipes of apparatus where refrigerant is used such as refrigerators, cold rooms, chillers, freezers, air conditioning units and any other equipment which lowers and maintains temperatures. It is a cost effective and easy-to-fit device for stopping leaks of highly fluid refrigerant.

Cooling occurs when refrigerant, circulating in a closed system through pipes and various parts, i.e. compressor, condenser, expansion valve or evaporator, evaporates to a gas which then condenses back to a liquid in a continuous cycle under considerable pressure. The pressure exerts a strain on the joints of the system and causes leakage. However if there is no leak, there is no loss of refrigerant during the life of the system.

One of the most efficient refrigerants in use is dichlorodifluorocarbon also called refrigerant-12. However this and other refrigerants contain CFC (synthetic chlorofluorocarbon) which is harmful to the environment particularly because of its damaging effects to the ozone layer. Any leak in the refrigeration system, which are often difficult to detect, is consequently a risk to the environment and it is essential to prevent leaks of refrigerant particularly with a CFC content.

Leaks of refrigerant also lead to refrigeration failure, with adverse consequences: cost of repairs, down time and wastage of refrigerated food, as well as the added risk of food poisoning if the food is consumed before refrigeration failure is detected. All of these problems exist world-wide.

Leaks occur for a number of reasons, examples of which are: distortion of pipes - loosening of joints - cracks on the flare of the pipe - where the joints expand and contract on the expansion valves - where the constant changes in temperature of the refrigerant play on the joints - from vibration of plant and/or machinery. Repairs themselves, traditionally made by welding or compression are also a common cause: welding is not always successful due to the difficult nature of the work; and compression joints can become damaged because of the excessive pressure required to tighten the joint.

The present device is a specifically designed seal as per drawings fig. I and II, made out of Teflon PFA fluorocarbon resin or PTFE PolytetraFluoroEthylene which contain C-C and C-F bonds, both of whose characteristics are a high resistance to friction and movement of temperature. The present device is shaped with an angle of 65 deg. or whatever is appropriate so that it can be comfortably located in the flare of the pipe in which the male part of the joint is pressed. Due to its shape, when a component is joined to a pipe by the screwing action of the nut, the present device is pressed by distortion into the various cavities between the female and male parts of the assembly and because of its composition seals the two parts with a positive and lasting gas tight bond. The seal is designed to distort into the following eight different locations: (see fig. IV)
1) the bevelled base of the component
2) the cavities of the thread of the part to be joined to the pipe
3) the flat surface at the extremity of the component between 1) and 2) above
4) the outer surface of the flare of the pipe
5) the edge of the flare fig III-F
6) the threaded part of the nut
7) the base of the nut around the pipe
8) the joint between the inner component (capsule) and the main part (valve)

Owing to the composition of the seal, the bond of the present device is not affected by the continuous expansion and contraction of the valve in which the refrigerant is compressed and vaporised. For the same reason, it is not affected either by vibration, or from any other movement as the device allows sufficient flexibility to prevent the occurrence of gas escaping and the subsequent loss of fluid. Also because of its fabric, the present device is not affected by extreme temperatures, nor is it affected by the constant change from low to high temperature within the refrigeration circuit.
To fit the different sizes of pipes and joints requiring flare connections, the present device is made in different sizes and different shapes as per drawing fig I and II.

The outside wall of the seal is coated with a Loctite (trade mark) solution or equivalent which holds it in position inside the flare of the pipe. The present device can be applied by means of a centring tool see fig V which positions the seal in the correct location inside the flare of the pipe accurately and quickly.

Fitting requires only basic tools; there is no need for forceful tightening as is currently the case for compression joints. It is a simple operation which is not dependant on any acquired skill. Whenever parts of the refrigeration system need to be further replaced, a new seal can be fitted quickly and easily for a further gas tight seal.

The present device makes the installation of replacement parts such as valves, compressors and other components a rapid, cost effective and secure leak proof operation. It can be used for all installations of in-line flare shaped components and pipe-valve connections for driers, solenoid valves, expansion valves, shut-off valves, and all pipe jointing requiring flare connections.

Another appreciable advantage is that it can be used for joining parts made of the same or different materials.

The disclosure in this application is intended to be by way of example only and it is to be understood that alternative materials and dimensions and means may be employed, as may be judged appropriate by the man skilled in the art, having regard to the purpose and advantages of the disclosed embodiments. Likewise, it is intended that the features specifically disclosed herein, suitably broadened in accordance with the foregoing sentence, will, in due course, form a basis for a selection of features defining an invention having novelty and inventive step, such selection to be made in due course, in accordance with the purpose and advantages of the disclosed embodiments.

Where, in the foregoing description, certain features are disclosed in combination with each other, it is to be understood that these features are not necessarily intended to be limited to use in combination for the purposes of the invention in general, and it is hereby stated that features disclosed herein are to be treated independently selectable for the purposes of the invention claimed.

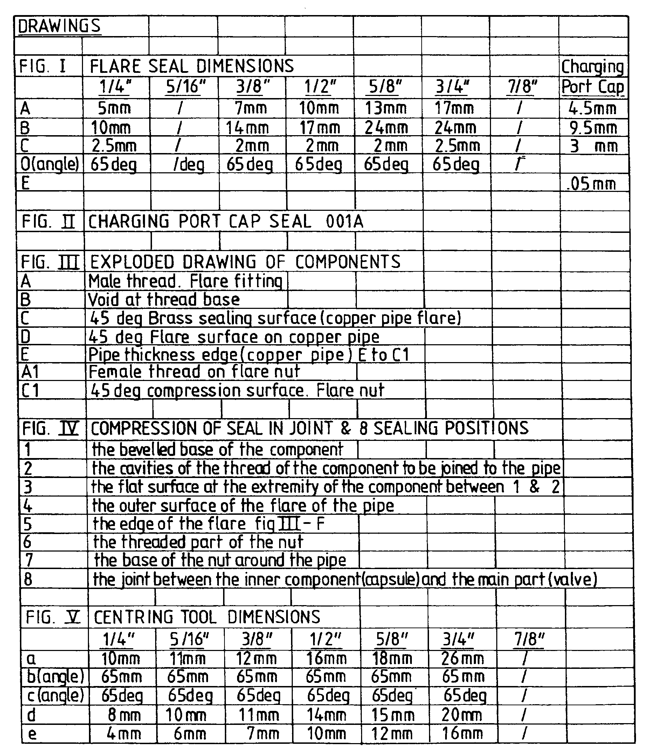

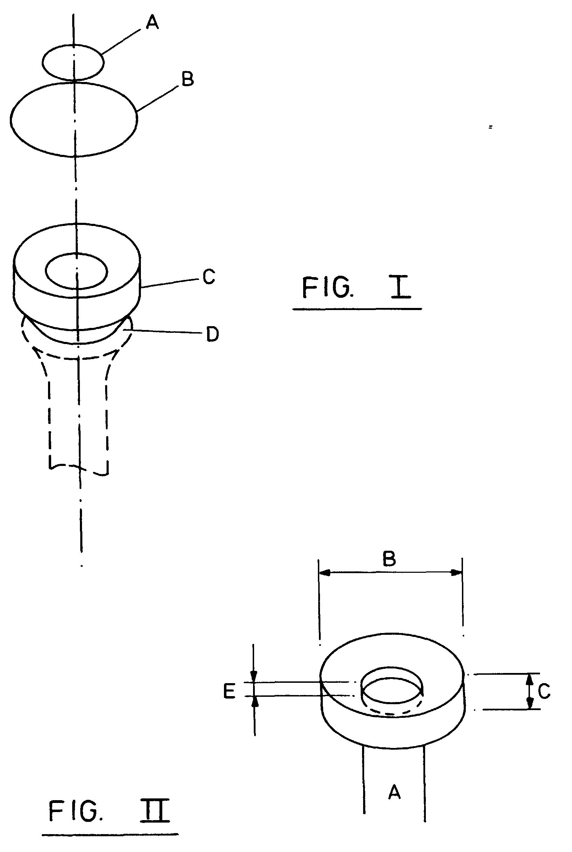

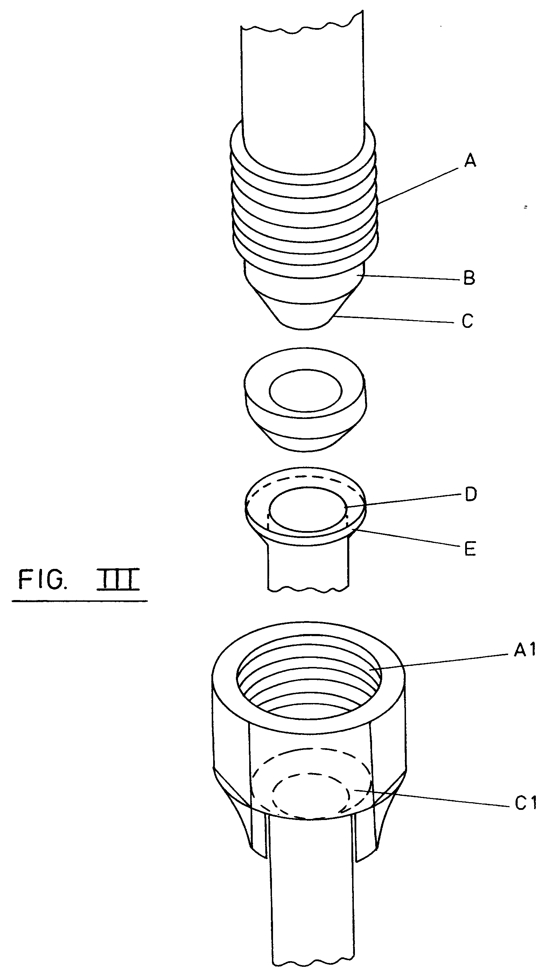

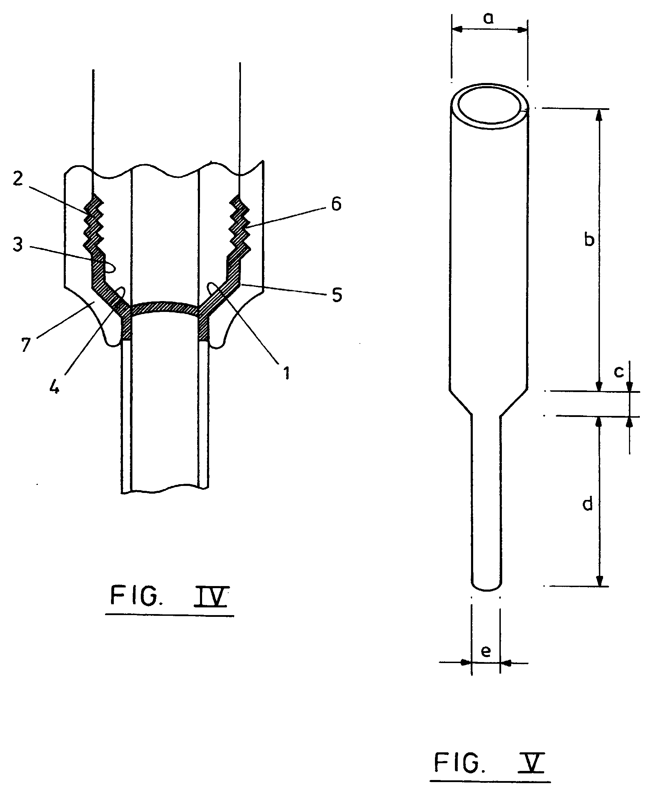

## Claims

1. A method of sealing a joint in a refrigeration system comprising:
a) providing a refrigerant fluid;
b) providing a circulation system for said refrigerant fluid including one or more heat exchangers and means for circulating said refrigerant fluid within said circulation system to cause heat exchange to be effected thereby;
c) providing sealing means for said circulation system at one or more joints in said circulation system and adapted to confine said refrigerant fluid within said circulation system;
d) providing said sealing means comprising a sealing member comprising a poly-halogenated polymer and adapted to be located in a separable joint in said circulation system;
characterised by;
e) said sealing member being adapted by having a co-efficient of hardness such as to be compressible into one or more cavities or interstices within said separable joint;
f) said joint comprising one or more of said cavities or interstices located on the path of escape of said refrigerant fluid from said circulation system;
g) said joint comprising a pair of actuatable compression members with said sealing member being located between said compression members and actuating means being provided and adapted to compress said sealing member in a manner such as to promote compression of same towards said cavities or interstices; and
h) said method comprising causing said actuating means to effect such compression of said sealing member at least partially into said cavities or interstices, whereby said escape of said refrigerant fluid from said circulation system through said joint is blocked edgewise by said compressed sealing member in said cavities or interstices.

2. A method of sealing a refrigeration system characterised by causing a sealing member comprising a poly-halogenated polymer to effect sealing with respect to refrigerant media in a separable joint between two components of said refrigeration system.

3. A method of sealing a refrigeration system characterised by causing a sealing member comprising a polymer material to effect sealing with respect to a refrigerant medium in a separable joint between two components of said refrigeration system.

4. A method according to claim 2 or claim 3 characterised by said sealing member being adapted to be compressed into one or more cavities or interstices within said separable joint.

5. A method according to anyone of claim 1 characterised by said compression members comprising a pair of complementary co-operatable members of a compression joint with said sealing member located therebetween and said method comprising causing said compression joint member to compress said sealing member.

6. A method according to claim 5 characterised by said compression joint members having cooperating tapered surfaces and said method comprising causing said tapered surfaces to compress said sealing member.

7. A refrigeration system comprising a joint sealed by a method according to anyone of claims 1 to 6.

8. A refrigeration system comprising:
a) a refrigerant fluid;
b) a circulation system for said refrigerant fluid including one or more heat exchangers and means for circulating said refrigerant fluid within said circulation system to cause heat exchange to be effected thereby;
c) sealing means for said circulation system at one or more joints in said circulation system and adapted to confine said refrigerant fluid within said circulation system;
d) said sealing means comprising a sealing member comprising a poly-halogenated polymer and adapted to be located in a joint in said circulation system;
characterised by;
e) said sealing member being adapted by having a co-efficient of hardness such as to be compressible into one or more cavities or interstices within said separable joint;
f) said joint comprising one or more of said cavities or interstices located on the path of escape of said refrigerant fluid from said circulation system;
g) said joint comprising a pair of actuatable compression members with said sealing member being located between said compression members and actuating means being provided and adapted to compress said sealing member in a manner such as to promote compression of same towards said cavities or interstices; and
h) said actuating means being adapted to effect such compression of said sealing member at least partially into said cavities or interstices, whereby said escape of said refrigerant fluid is blocked edgewise by said compressed sealing member in said cavities or interstices.
